# EUROPEAN PATENT APPLICATION

(11) **EP 1 986 360 A1**
(43) Date of publication of application: **29.10.2008**
(21) Application number: 07107116.1
(22) Date of filing: 27.04.2007
(51) Int. Cl.: H04J 14/02, H04B 10/26

(54) **Optical signal processing**

(71) Applicant: National University of Ireland Galway, Galway (IE)
(72) Inventor: Connolly, Colm, Galway (IE)
(74) Representative: Brophy, David Timothy

(57) **Abstract**

An endpoint terminal is provided for use in optical communications, having a first optical input port for receiving an encoded signal, a second optical input port for receiving an unencoded signal, a detector coupled to the first optical input port for detecting said encoded signal, a transparent modulator coupled to the second optical input port for receiving and modulating said unencoded signal, and an optical output port coupled to the transparent modulator for outputting a modulated signal from said terminal. A central terminal and method of communication are also disclosed.

## Description

This invention relates to optical signal processing. This invention has particular application in telecommunications over passive optical networks and in computer interconnects and other smaller-scale networks.

EP 1 612 974 discloses a wavelength division multiplexing (WDM) passive optical network (PON) in which the optical line terminal (OLT) at the central office (CO) generates a pair of distinct wavelengths for each endpoint or optical network unit (ONU). A first one of these wavelengths is encoded at the CO to carry the downstream signal to the ONU where it is decoded using an optical receiver. The other wavelength is transmitted to the ONU which has a reflective modulator, i.e. a semiconductor optical amplifier (SOA) which encodes the upstream signal from the ONY to the CO. Arrayed waveguide gratings are used to multiplex and de-multiplex the signal to and from individual ONUs based on their distinct wavelengths.

The system of EP 1 612 974 is an improvement over systems in which each ONU requires its own laser diode, making the ONUs too costly and complex for practical wide scale distribution. Nevertheless, the solution proposed in EP 1 612 974 suffers from many of same drawbacks. The semiconductor optical amplifier technology has a high coupling loss, is polarisation dependent and introduces an unacceptably high noise level. In terms of size, it is comparable to the size of a laser, and it is not compatible with an all-optical environment. A further drawback to the system is the fact that the central office requires one laser for the downstream wavelengths and another for the upstream wavelengths, doubling the cost. While embodiments are disclose in which a single laser is used, the number of output wavelengths available from the laser imposes a limit of half that number of ONUs.

The invention provides an endpoint terminal for use in optical communications, comprising a first optical input port for receiving an encoded signal, a second optical input port for receiving an unencoded signal, a detector coupled to the first optical input port for detecting said encoded signal, a transparent modulator coupled to the second optical input port for receiving and modulating said unencoded signal, and an optical output port coupled to the transparent modulator for outputting a modulated signal from said terminal.

The modulator may employ electrical signals to modulate the received unencoded signal. Alternatively, it is envisaged that the modulator can be an all-optical device which employs optical signals to modulate the received unencoded optical signal.

Preferably, the transparent modulator is a silicon modulator.

The preferred silicon modulator is a Complementary metal-oxide-semiconductor (CMOS) device. This technology is used widely today making its production cheap and easy. Two important characteristics of CMOS devices are high noise immunity and low static power supply drain. Other modulators, known in existing passive optical networks, are electro-absorption moodulators (EAMs) which use lithium niobate and are more difficult to produce. In particular, such modulators cannot be produced on a single wafer.

The skilled person will appreciate that the terminal can thus be used in any optical communications system. Thus, the terminal may be a component of a computer or other data processing system, employed in short distance communications within that data processing system. The terminal can equally be a terminal for use in long distance communications over an optical network, such as in a telecommunications network.

The invention also provides a central terminal for an optical communications network, comprising a light source, an optical splitter for separating light from said source into a pair of signals, a modulator for encoding a first of said signals received from said splitter, a first output port coupled to said modulator for outputting said encoded signal, and a second output port coupled to said splitter for outputting an unencoded signal.

Preferably, said terminal comprises a plurality of said modulators each of which receives a different signal from said light source, whereby said terminal outputs a plurality of encoded signals each distinguishable from one another and a corresponding plurality of unencoded signals also distinguishable from one another.

A single optical splitter may be used for a plurality of the different light signals or each signal may have its own splitter.

Preferably, the terminal also includes a first multiplexer for multiplexing the encoded optical signals from each modulator and a second multiplexer for multiplexing the unencoded signals.

Preferably, the first output port or multiplexer connects to a first physical transmission path of a network and the second output port or multiplexer connects to a second physical transmission path of a network.

The first and second physical transmission paths can be separate fibers. Alternatively, for the return trip a bidirectional fiber cable could be used for one of the downlinks(unencoded or encoded) and the uplink but will reduce the available wavelengths by half.

In another aspect the invention provides a method of optically communicating between a central terminal and an endpoint terminal, comprising the steps of:
(a) generating a light signal at the central terminal;
(b) splitting said light signal into a pair of signals;
(c) encoding a first of said pair of signals and transmitting the encoded signal to the endpoint terminal;
(d) transmitting the second of said pair of signals unencoded to the endpoint terminal.
   Preferably the method further includes the steps of:
(e) decoding the encoded signal at the endpoint terminal;
(f) encoding the unencoded signal at the endpoint terminal;
(g) transmitting the signal which was encoded at the endpoint terminal to the central terminal.

The invention provides a further and alternative central terminal for an optical communications network, comprising a light source generating first and second light signals, a modulator for receiving said first light signal and modulating said first signal, a first optical splitter for separating said modulated first light signal into a plurality of encoded first signals each for transmission to a respective one of said endpoint terminals, a second optical splitter for separating said second light signal into a plurality of unencoded second signals each for transmission to a respective endpoint terminal, and a receiver for receiving signals from said plurality of endpoint terminals and for controlling said modulator in response to said received signals.

In a related aspect the invention provides a method of optically communicating between a central terminal and an endpoint terminal, comprising the steps of:
(a) generating first and second light signals at the central terminal;
(b) receiving from a plurality of endpoint terminals one or more encoded signals;
(c) encoding said first signal in response to said one or more received signals from said endpoint terminals;
(d) splitting said encoded first signal into a plurality of encoded signals and transmitting each of said encoded signals to a respective endpoint terminal; and
(e) splitting said second signal into a plurality of unencoded signals and transmitting each of said unencoded signals to a respective endpoint terminal.
   Preferably the method further includes the steps, carried out by one or more of said endpoint terminals, of:
(f) decoding the encoded first signal;
(g) encoding the unencoded second signal;
(h) transmitting the encoded second signal to the central terminal whereby said encoded signal is received in step (b) and employed in encoding said first signal in step (c).

The invention further provides an optical communications system comprising a central terminal of either of the aforesaid types, an endpoint terminal as aforesaid, and means for communicating said unencoded and encoded signals between the central and endpoint terminals.

The invention will now be further illustrated by the following description of embodiments thereof, given by way of example only with reference to the accompanying drawings in which:
Fig. 1 is a network architecture illustrating an optical telecommunications system; and
Fig. 2 is a network architecture illustrating an optical interconnect system for a computer.

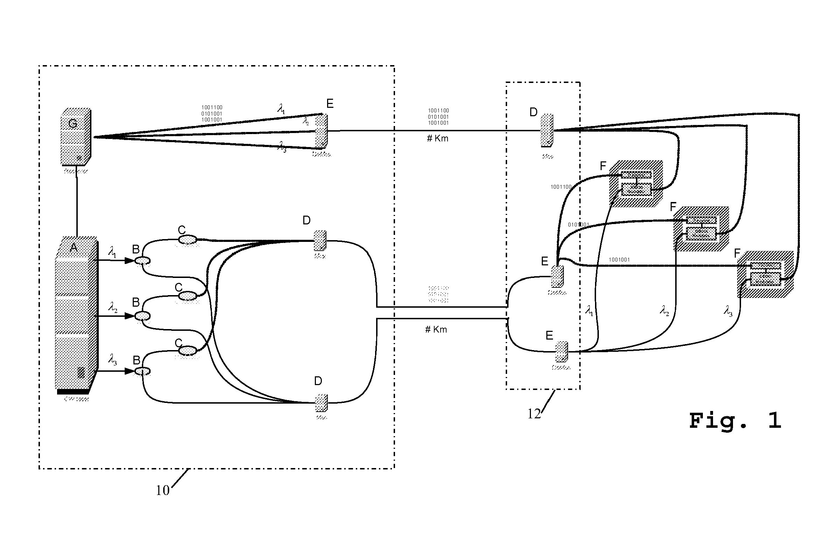

In Fig. 1, a central office (or central terminal) 10 is shown, comprising a continuous wave, non-tuned laser source A which generates multiple wavelength outputs. For simplicity, three such outputs are shown labelled as λ₁, λ₂ and λ₃. In reality, many more such wavelengths could be output from the laser source A. Each signal (wavelength) from the laser enters a beam splitter B. While the beam splitters for each signal are shown as distinct from one another, a single beam splitter could split multiple signals.

One output signal for each wavelength is directed to a dedicated modulator C for encoding that particular wavelength with information for transmission to a remote terminal F. Such modulators may be transparent modulators or any other type of modulator suitable for encoding an optical signal at the wavelengths output by the laser A. The modulated or encoded signal is directed from each modulator to a multiplexer D which combines light of different wavelengths on the same fibre for transmission over the network.

The other output from each beam splitter, which is an unencoded signal with one of the wavelengths λ₁, λ₂ and λ₃, is routed directly to a different multiplexer D which combines the unencoded light signals of different wavelengths for transmission over a different optical fibre.

Each of the two optical fibres for long-distance transmission terminates at a respective demultiplexer E. The demultiplexers E form part of a local exchange 12 which distributes the downstream signals to individual terminals over the so-called "last mile", and which receives the upstream signals from the terminals for transmission back to the central office 10.

A first of the demultiplexers E receives the combined encoded signals of wavelengths λ₁, λ₂ and λ₃, splits this combined signal into the respective component wavelengths and directs each separate wavelength to a different endpoint terminal F where an optical receiver component of the endpoint terminal receives and decodes the optical signal to recover the encoded information.

The other demultiplexer E which received the combined unencoded signals of wavelengths λ₁, λ₂ and λ₃, similarly splits this combined signal into the respective component wavelengths and directs each separate wavelength to a different endpoint terminal F, i.e. the terminal which received the encoded signal of wavelength of wavelength λ₁ will also receive the unencoded signal of wavelength λ₁. The unencoded signal is passed through a transparent silicon modulator which uses electrical signals to impose an encoding onto the received signal as it passes through. The modulator does not distort the signal, has little coupling loss, is not polarisation dependent and consumes very little power. Most importantly, this type of modulator can be fabricated using Complementary metal-oxide-semiconductor (CMOS) silicon wafer technology wherein large numbers of small circuits can be mass produced at low cost.

The output from the modulator passes through an output port where it returns to the local exchange 12. A multiplexer D at the local office combines the various received encoded upstream signals coming from each of the endpoint terminals. The wavelengths λ₁, λ₂ and λ₃ are combined in the local exchange multiplexer and transmitted over an upstream fibre to a demultiplexer E at the central office. That final demultiplexer E separates out the individual wavelengths and passes the wavelengths to different channels of a receiver G.

Because the modulator in the endpoint terminal simply shapes the signal passing through the terminal, there is no requirement to generate a signal at the terminal itself. The source of the downstream and the upstream signals is a single laser A. This is in contrast to known systems which either require a costly and power-hungry laser in the endpoint terminal, or which require two lasers at the central office. Known systems which employ only a single laser at the central office suffer from a limitation that the downstream signal is divided into time segments with part of the signal period being encoded and part of the signal remaining unencoded to allow it to be used for upstream signalling. This cuts the available bandwidth in half.

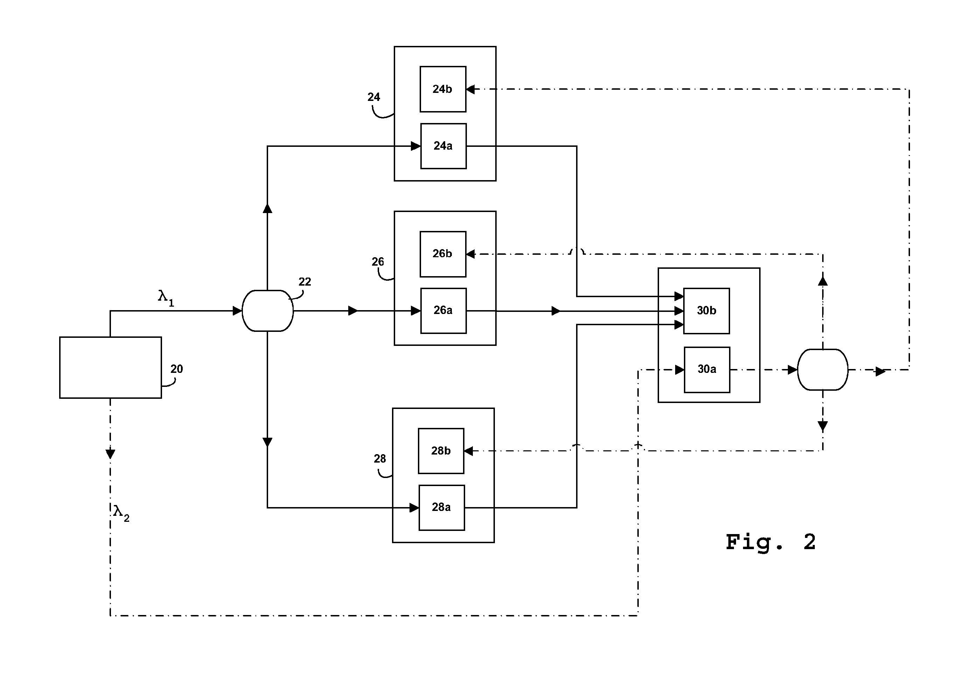

A second embodiment is shown in Fig. 2, which provides the interconnects in a computer system between carious components such as the CD drive 24, processor or CPU 26 and motherboard 28. In reality, this is an overly simplified view of the operation of a computer but it suffices to demonstrate the communication needed between various items of a data processing system which may need to communicate with and control one another.

A continuous wave laser 20 generates a pair of wavelengths λ₁ and λ₂. For ease of reference, signals of wavelength λ₁ are shown in unbroken lines while those of wavelength λ₂ are shown in broken lines. The laser output of wavelength λ₁ is directed to a splitter 22 from which it emerges as three substantially identical unencoded signals.

For consistency with other usage in this description, the unencoded signals will be referred to as the "second signals" but for ease of understanding they are described before the "first" or encoded signals in this embodiment.

One of the three unencoded signals is directed from splitter 22 to CD drive 24, another is directed to processor 26, and the third to motherboard 28. More particularly, each such component 24, 26, 28 has a miniature endpoint terminal associated with it comprising a transparent modulator 24a,26a,28a for receiving the unencoded second signal and applying a modulation to it in order to communicate with the other components. The endpoint terminal of each component 24,26,28 also has a receiver 24b,26b,28b for receiving information from other components as will be further described below.

Thus, each component's modulator 24a,26a,28a receives and encodes a "second signal" of wavelength λ₁. This second signal, emerging from the modulator with the encoding imposed on it by the modulator, includes both the actual information intended to be communicated to another component and addressing information so that the destination can be identified. A scheduling algorithm can alternatively be used so the different components of information do not collide and are not confused with one another. If different wavelengths (hence more lasers) are used then no scheduling algorithm or addressing would be needed, and faster communication can be achieved.

The output of the modulator 24a,26a,28a of each of the three components 24,26,28 is directed to a receiver 30b of a switching unit 30 (which itself is a miniature endpoint terminal having both a modulator 30a and the receiver 30b). The receiver 30b decodes these encoded "second signals" of wavelength λ₁ coming from the various components and uses this to control a modulator 30a.

The modulator 30a receives the "first signal" (wavelength λ₂) from CW laser 20 and imposes the encoding dictated by receiver 30a. This encoding will once again include information to be communicated to a particular component and addressing information (such as in a packet header). The encoded first signal λ₂ from modulator 30a is split into three identical components by a splitter 32 and each of the three outputs containing the same encoded first signal from splitter 32 is directed to a different one of the components 24, 26, 28. The encoded first signals are received at the receiver 30b of the terminal associated with each component 24,26,28, where the first signal is decoded by the receiver. Relevant information, identified by the addressing information, is acted on by the component and information addressed to another component is ignored.

In this way, if CD unit 24 is communicating with CPU 26, for example, its modulator 24a will encode the intended information onto the second signal of wavelength λ₁ and send this, to the receiver 30b of the switch 30. The information is accompanied by appropriate source and destination information (i.e. information which identifies the source as CD drive 24 and the destination as CPU 26, such as by encoding the respective MAC addresses of the components in appropriate header fields). The receiver 30a decodes the information, notes the source and destination, and passes this to the modulator 30a which re-encodes the data onto the received first signal of wavelength λ₂.

The receiver 30b and modulator 30a are similarly decoding and re-encoding similar information from the other components with different source and destination addressing, and all of this re-encoded information ends up on the encoded first signal emerging from the modulator 30a, from where it is sent to the splitter 32.

Splitter 32 sends a copy of the information to each of the component's receivers 24b,26b,28b, which decode and examine the addressing information. Thus, the information from the CD drive 24 intended for the CPU 26 will be discarded when it is decoded at each of the receivers 24b and 28b, but will be passed to the CPU by receiver 26b. Should this information necessitate a response to the CD drive, then such a response will be encoded by modulator 26a with suitable addressing, at which point the process begins again (albeit with reversed source and destination).

It will be appreciated that the system could alternatively operate on a time division system which would enable the addressing information to be discarded in favour of time slots for each component to send its information.

The invention is not limited to the embodiment(s) described herein but can be amended or modified without departing from the scope of the present invention.

## Claims

1. An endpoint terminal for use in optical communications, comprising a first optical input port for receiving an encoded signal, a second optical input port for receiving an unencoded signal, a detector coupled to the first optical input port for detecting said encoded signal, a transparent modulator coupled to the second optical input port for receiving and modulating said unencoded signal, and an optical output port coupled to the transparent modulator for outputting a modulated signal from said terminal.

2. An endpoint terminal as claimed in claim 1, wherein the transparent modulator employs electrical signals to modulate the received unencoded signal.

3. An endpoint terminal as claimed in claim 1, wherein the transparent modulator employs optical signals to modulate the received unencoded optical signal.

4. An endpoint terminal as claimed in claim 1, wherein the transparent modulator is a silicon modulator.

5. An endpoint terminal as claimed in claim 4, wherein said silicon modulator is a complementary metal-oxide-semiconductor (CMOS) device.

6. A central terminal for an optical communications network, comprising a light source, an optical splitter for separating light from said source into a pair of signals, a modulator for encoding a first of said signals received from said splitter, a first output port coupled to said modulator for outputting said encoded signal, and a second output port coupled to said splitter for outputting an unencoded signal.

7. A central terminal as claimed in claim 6, comprising a plurality of said modulators each of which receives a different signal from said light source, whereby said terminal outputs a plurality of encoded signals each distinguishable from one another and a corresponding plurality of unencoded signals also distinguishable from one another.

8. A central terminal as claimed in claim 7, wherein a single optical splitter is used for a plurality of the different light signals.

9. A central terminal as claimed in claim 6, wherein a plurality of optical splitters are provided, each splitter separating a different source or set of sources.

10. A central terminal as claimed in claim 6, further comprising a first multiplexer for multiplexing the encoded optical signals from each modulator and a second multiplexer for multiplexing the unencoded signals.

11. A central terminal as claimed in claim 6 or claim 10, wherein the first output port or multiplexer connects to a first physical transmission path of a network and the second output port or multiplexer connects to a second physical transmission path of a network.

12. A central terminal as claimed in claim 11, wherein the first and second physical transmission paths are provided as separate fibers.

13. A method of optically communicating between a central terminal and an endpoint terminal, comprising the steps of:
(a) generating a light signal at the central terminal;
(b) splitting said light signal into a pair of signals;
(c) encoding a first of said pair of signals and transmitting the encoded signal to the endpoint terminal;
(d) transmitting the second of said pair of signals unencoded to the endpoint terminal.

14. A method as claimed in claim 13, further comprising the steps of:
(a) decoding the encoded signal at the endpoint terminal;
(b) encoding the unencoded signal at the endpoint terminal;
(c) transmitting the signal which was encoded at the endpoint terminal to the central terminal.

15. A central terminal for an optical communications network, comprising a light source generating first and second light signals, a modulator for receiving said first light signal and modulating said first signal, a first optical splitter for separating said modulated first light signal into a plurality of encoded first signals each for transmission to a respective one of said endpoint terminals, a second optical splitter for separating said second light signal into a plurality of unencoded second signals each for transmission to a respective endpoint terminal, and a receiver for receiving signals from said plurality of endpoint terminals and for controlling said modulator in response to said received signals.

16. A method of optically communicating between a central terminal and an endpoint terminal, comprising the steps of:
(a) generating first and second light signals at the central terminal;
(b) receiving from a plurality of endpoint terminals one or more encoded signals;
(c) encoding said first signal in response to said one or more received signals from said endpoint terminals;
(d) splitting said encoded first signal into a plurality of encoded signals and transmitting each of said encoded signals to a respective endpoint terminal; and
(e) splitting said second signal into a plurality of unencoded signals and transmitting each of said unencoded signals to a respective endpoint terminal.

17. A method as claimed in claim 16, further comprising the steps, carried out by one or more of said endpoint terminals, of:
(a) decoding the encoded first signal;
(b) encoding the unencoded second signal;
(c) transmitting the encoded second signal to the central terminal whereby said encoded signal is received in step (b) and employed in encoding said first signal in step (c).

18. An optical communications system comprising a central terminal as claimed in any of claims 6-12 or 15, an endpoint terminal as claimed in any of claims 1-5, and means for communicating said unencoded and encoded signals between said central and endpoint terminals.
